# EUROPEAN PATENT SPECIFICATION

(11) **EP 3 428 433 B1**
(45) Date of publication and mention of the grant of the patent: **19.02.2020**
(21) Application number: 17763122.3
(22) Date of filing: 03.03.2017
(51) Int. Cl.: F02F 1/42, F02B 31/00, F02F 1/32, F02M 35/10

(54) **INTERNAL COMBUSTION ENGINE INTAKE STRUCTURE**
VERBRENNUNGSMOTORANSAUGSTRUKTUR
STRUCTURE D'ADMISSION DE MOTEUR À COMBUSTION INTERNE

(30) Priority: 09.03.2016 JP 2016045800
(43) Date of publication of application: 16.01.2019
(73) Proprietor: Honda Motor Co., Ltd., Tokyo 107-8556 (JP)
(72) Inventor: NAKAMURA, Yohei, Wako-shi Saitama 351-0193 (JP); HANAWA, Kaoru, Wako-shi Saitama 351-0193 (JP); FUJIKUBO, Makoto, Wako-shi Saitama 351-0193 (JP)
(74) Representative: Weickmann & Weickmann PartmbB
(86) International application number: PCT/JP2017/008537
(87) International publication number: WO 2017/154782

(56) References cited:
- JP-A- 2002 501 829
- JP-A- 2003 239 750
- JP-A- 2009 180 225
- JP-A- 2015 190 373
- US-A- 4 497 288

## Description

### [Technical Field]

The present invention relates to an intake structure for use in an internal combustion engine, in which a partition member is integrally formed with an intake port.

### [Background Art]

Heretofore, intake structures for internal combustion engines include a continuous intake air-fuel mixture passage provided by an inlet pipe that is connected to the intake port of a cylinder head. One such intake structure, disclosed in Patent Document 1 mentioned below, for example, has a partition member provided in an intake air passageway in order to generate a tumbling air-fuel mixture flow in the combustion chamber of an internal combustion engine, the partition member dividing the intake air-fuel mixture passage into a tumble flow passageway and a main flow passageway. When the internal combustion engine operates under a low load, an intake air-fuel mixture from the on/off valve of a carburetor is led into the tumble flow passageway to promote the generation of a tumble flow. When the internal combustion engine operates under a high load, an intake air-fuel mixture is led chiefly into the main flow passageway.

With the above intake structure, the cylinder head and the inlet pipe may be made of different materials, and the partition member provided in the intake air-fuel mixture passage may include separate partition members provided respectively in the cylinder head and the inlet pipe.

For this reason, the partition member provided in the cylinder head and leading to the intake port is often cast integrally with the cylinder head. In such a case, if a hollow or vacant area is formed between the partition member and an inlet pipe mount as in the prior art, then the fluidity of a molten metal, typically molten aluminum, that flows to cast the thin partition member tends to be poor. In addition, the molten aluminum that is about to flow to cast the partition member has its heat absorbed by a mold for forming the hollow or vacant area, so that the molten aluminum tends to solidify before it flows into the partition member.

### [Prior Art Literature]

### [Patent Document]

[Patent Document 1]

JP H11-210478 A (FIGS. 1, 6, and 11)

JP 2015 190373 A discloses an intake structure for an internal combustion engine with a partition in an intake port.

### [Summary of the Invention]

### [Underlying Problem to be solved]

The present invention has been made in view of the above prior art. It is an object of the present invention to provide an intake structure for use in an internal combustion engine including a cylinder head in which a partition member is integrally formed with an intake port, wherein the intake structure is arranged to make it easy to retain the heat of a molten metal when the molten metal is introduced to cast the intake structure, thereby increasing the fluidity of the molten metal introduced to cast the intake structure.

### [Means to solve the Problem]

To achieve the above task, there is provided in accordance with the present invention an intake structure for an internal combustion engine, in which a combustion chamber is defined between a top surface of a piston slidably fitted in a cylinder bore in a cylinder block and an inner surface of a combustion chamber ceiling wall in a cylinder head which is faced by the top surface, and an intake port and an exhaust port extend from an intake valve opening and an exhaust valve opening that are open in the inner surface of the combustion chamber ceiling wall in the cylinder head, the intake port and the exhaust port being curved in directions spaced away from each other. An inlet pipe is connected to the intake port, providing a continuous intake air-fuel mixture passage which is divided into a first intake air-fuel mixture passageway and a second intake air-fuel mixture passageway by a partition, the partition member in the intake port being integrally formed with the cylinder head. The cylinder head has a connection face member for connection to the inlet pipe, the connection face member including an inlet pipe mount portion for receiving an inlet pipe fastening member to be threaded therein, and the inlet pipe mount portion and the partition member of the intake port are integrally formed with each other, and at least part of the inlet pipe mount portion is positioned on an extension of the partition member in a direction across the intake port on an upstream end face of the intake port.

According to the present invention, the inlet pipe mount portion and the partition member are integrally coupled to each other by a joint. The joint lies on an extension of the partition member extending in leftward and rightward directions across the intake port.

According to a preferred embodiment of the present invention, the cylinder head has a spark ignition plug mount on an outer surface of the combustion chamber ceiling wall, and a cavity in a region of the spark ignition plug mount, the cylinder head having an opening on the side of the inlet pipe mount portion of the cavity, the opening and the inlet pipe mount portion being offset from each other.

### [Advantageous Effects of the Invention]

With the intake structure for an internal combustion engine according to the present invention, in the cylinder head in which the partition member is integrally formed with the intake port, the partition member and the inlet pipe mount portion are brought closely to each other, providing an increased volume in a compact area, so that when the cylinder head is cast, it is easy to retain the heat of a molten metal, and fluidity of the molten metal is increased. In addition, as the partition member and the inlet pipe mount portion are structurally contiguous, the rigidity of and around the inlet pipe mount portion is increased.

According to the embodiment of the present invention, the joint by which the inlet pipe mount portion and the partition member are coupled to each other allows a molten metal introduced to cast the cylinder head to flow therethrough into the partition member. Furthermore, fluidity of a molten metal flowing into the partition is increased because the heat of the molten metal prevented from being absorbed by a mold for forming a hollow area which would otherwise be present between the inlet pipe mount portion and the partition member.

According to the embodiment of the present invention, since the inlet pipe mount portion and the opening of the cavity on the side of the inlet pipe mount portion are offset from each other, the open area of the opening of the cavity is increased to cool the spark ignition plug mount of the cylinder head well.

### [Brief Description of the Drawings]

FIG. 1 is a right-hand side elevational view of a two-wheel scooter-type motorcycle having thereon a power unit that incorporates an intake structure for use in an internal combustion engine according to an embodiment of the present invention;
FIG. 2 is a right-hand side elevational view of a rear portion of the scooter-type motorcycle shown in FIG. 1, with a vehicle body cover removed;
FIG. 3 is a sectional side elevational view of the internal combustion engine of the power unit shown in FIG. 2, the parts being of the same orientation as those shown in FIG. 2;
FIG. 4 is an enlarged view of a portion of the internal combustion engine shown in FIG. 3;
FIG. 5 is a left-hand side elevational view of the shell body of a cylinder head, the left of FIG. 5 being oriented forwardly of the vehicle;
FIG. 6 is a plan view of the shell body of the cylinder head, taken along line VI - VI of FIG. 5;
FIG. 7 is a sectional plan view of the shell body of the cylinder head, taken along line VII - VII of FIG. 5;
FIG. 8 is a perspective view of an upper surface of the shell body of the cylinder head, taken along line VIII of FIG. 5; and
FIG. 9 is a sectional front elevational view of the shell body of the cylinder head, taken along line IX - IX of FIGS. 6 and 7.

### [Embodiment of the Invention]

An intake structure for use in an internal combustion engine according to an embodiment of the present invention will be described below with reference to the drawings.

Forward, rearward, leftward, rightward, upward, and downward directions, and other directional expressions used in the present description and the claims are in accord with those of a vehicle having an internal combustion engine that incorporates the intake structure according to the present embodiment. According to the present embodiment, the vehicle refers to a small-size two-wheel vehicle such as a scooter-type motorcycle, for example.

In the drawings, FR represents a forward direction of the vehicle, LH a leftward direction of the vehicle, RH a rightward direction of the vehicle, and UP an upward direction of the vehicle.

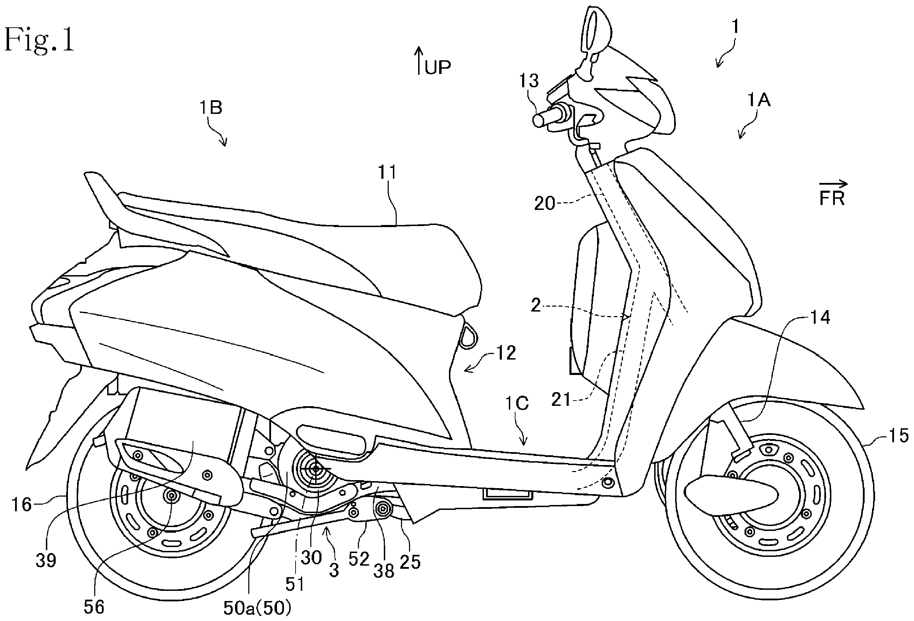

FIG. 1 shows a right-hand side elevational view of a two-wheel scooter-type motorcycle (hereinafter simply referred to as "motorcycle") 1 having a power unit that includes an internal combustion engine according to the present embodiment.

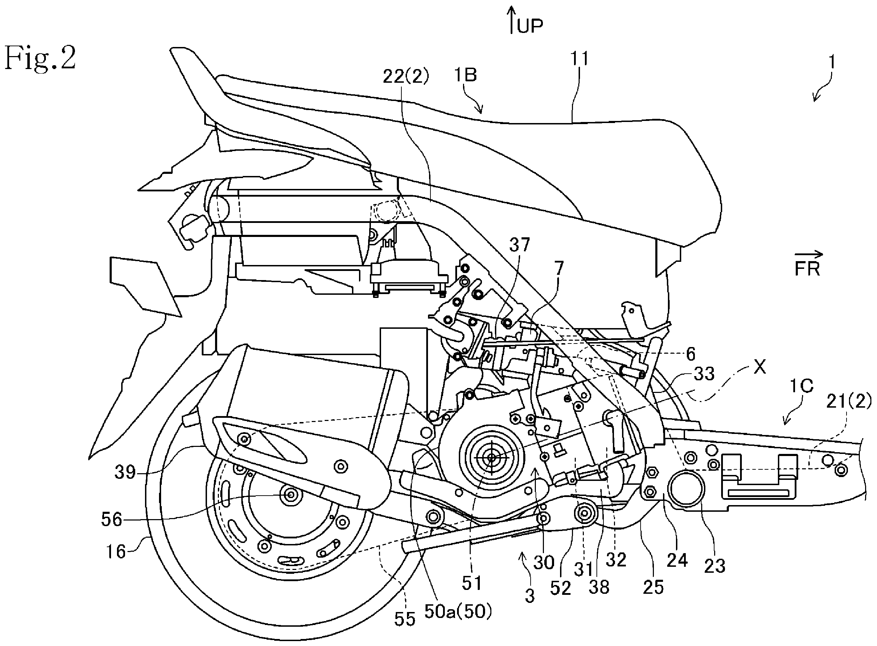

The motorcycle 1 includes a front vehicle portion 1A and a rear vehicle portion 1B that are coupled to each other by a low floor portion 1C, and has a vehicle body including a vehicle body frame 2 as a skeletal structure that generally includes a down tube 21 and a pair of left and right main pipes 22 (see FIG. 2).

Specifically, the down tube 21 extends downward from a head pipe 20 of the front vehicle portion 1A and is bent horizontally at a lower end portion thereof and extends rearward below the floor portion 1C. As shown in FIG. 2, a pair of the left and right main pipes 22 are joined to a rear end of the horizontal portion of the down tube 21 by a joint frame 23 extending in widthwise directions of the vehicle. The main pipes 22 extend obliquely rearward from the joint frame 23, and are bent at a reduced gradient and extend rearward.

The main pipes 22 support a rider's seat 11, a storage case, a fuel tank, and the like beneath the rider's seat 11, and an area below the rider's seat 11 is covered with the vehicle body cover 12.

In the front vehicle portion 1A, a handle 13 is angularly movably supported on and disposed above the head pipe 20, and a front fork 14 extends downward from the head pipe 20, with a front wheel 15 rotatably supported on the lower end of the front fork 14.

As shown in FIG. 2, which is a right-hand side elevational view of a rear portion of the motorcycle 1, with the vehicle body cover 12 removed, a bracket 24 projects from the lower ends of the oblique portions of the main pipes 22, and a power unit 3 is swingably joined to and supported on the bracket 24 by a link 25.

The power unit 3 includes, in its front portion, a single-cylinder four-stroke-cycle air-cooled internal combustion engine (hereinafter referred to as "internal combustion engine") 30. The internal combustion engine 30 includes a crankshaft 51 extending in the widthwise directions of the vehicle and rotatably supported in a front portion of a power unit case 50 that serves as a crankcase 50a, and has a cylinder axis X inclined largely forward so as to lie essentially horizontally. A hanger arm 52 projects forward from the lower end of the power unit case 50 and has an end coupled to the link 25 that is mounted to the bracket 24 on the main pipes 22.

The power unit 3 has the internal combustion engine 30 inclined largely forward in the front portion of the power unit case 50 that serves as the crankcase 50a. The internal combustion engine 30 includes a cylinder block 31, a cylinder head 32, and a cylinder head cover 33 that are successively stacked and fastened together. A power transmitting case 55, including a belt-type continuously variable transmission and the like, extends integrally rearward on the left side from the crankcase 50a. A rear axle 56 that serves as the output shaft of the power unit 3 is disposed rearward of the power transmitting case 55, and a rear wheel 16 is mounted on the rear axle 56.

A rear cushion, not shown, is interposed between the power transmitting case 55 in a rear portion of the power unit 3 and rear portions of the main pipes 22.

As shown in FIG. 2, an inlet pipe 6 extends and is curved rearward from an upper portion of the cylinder head 32 that is inclined largely forward of the internal combustion engine 30 in an upper portion of the power unit 3. A carburetor 7 connected to the inlet pipe 6 is positioned above the cylinder block 31. The carburetor 7 is connected through a connecting tube 37 to an air cleaner device, not shown, disposed above the power transmitting case 55.

An exhaust pipe 38 extends downward from a lower portion of the cylinder head 32, is bent rearward and shifted to the right, extends rearward, and is connected to a muffler 39 on the right side of the rear wheel 16.

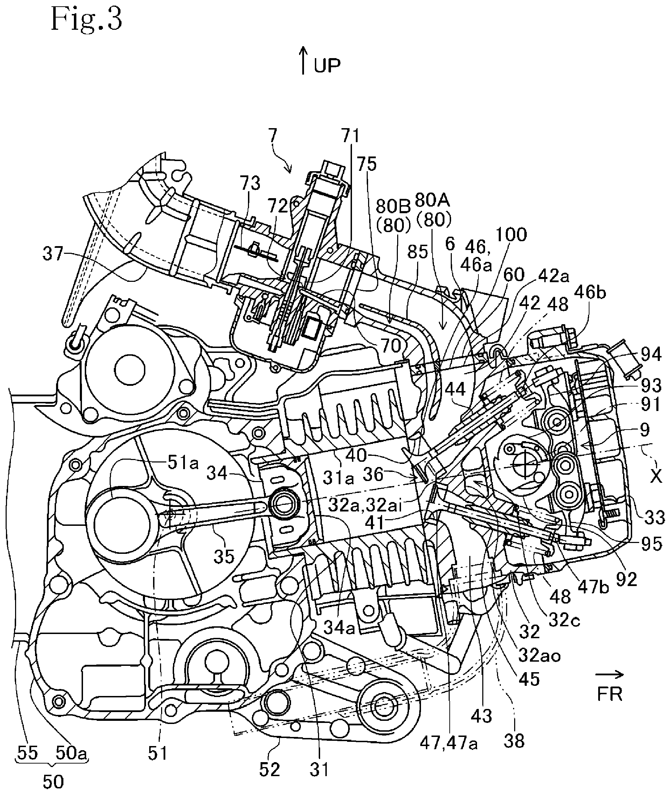

FIG. 3 shows a sectional side elevational view of the front portion of the power unit 3, i.e., the internal combustion engine 30, the parts being of the same orientation as those shown in FIG. 2. The internal combustion engine 30 includes a piston 34 movable back and forth in a cylinder bore 31a defined in the cylinder block 31, a crankpin 51a on a crankshaft 51, and a connecting rod 35 interconnecting the piston 34 and the crankpin 51a.

The piston 34 that is slidably fitted in the cylinder bore 31a defined in the cylinder block 31 has a top surface 34a that faces an inner surface 32ai of a combustion chamber ceiling wall 32a of the cylinder head 32. The top surface 34a and the inner surface 32ai define a combustion chamber 36 therebetween.

According to the present embodiment, the internal combustion engine 30 incorporates a SOHC-type two-valve system and includes a valve train or valve operating mechanism 9 provided in the cylinder head 32.

A cylinder head cover 33 is superposed on and placed over the cylinder head 32 in covering relation to the valve operating mechanism 9.

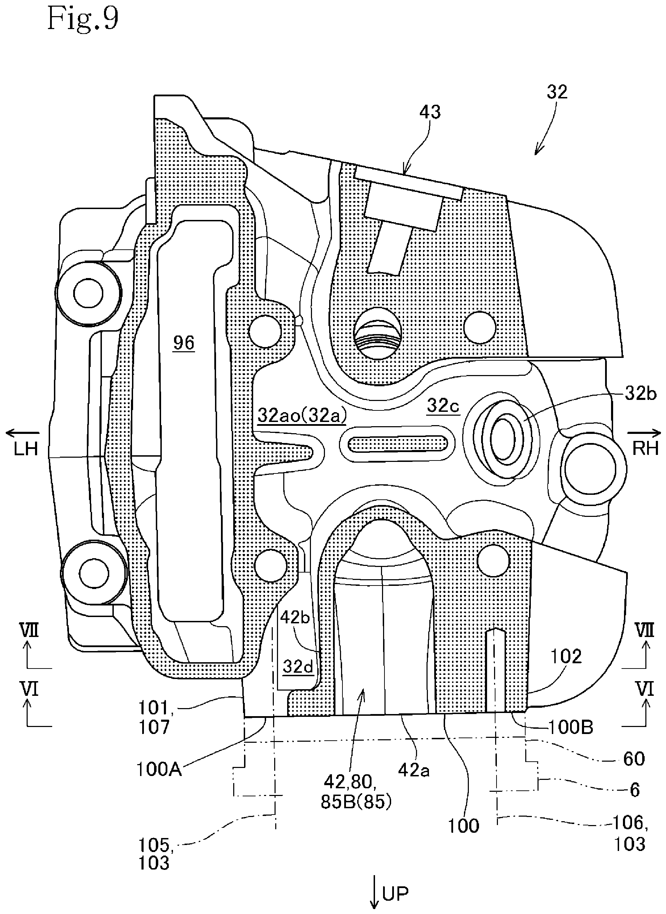

T transmit power to the valve operating mechanism 9 provided in the cylinder head cover 33, an endless cam chain, not shown, is trained around and extends between a camshaft 91 and the crankshaft 51 through a cam chain compartment 96 (see FIG. 9) provided on one side of the crankcase 50a, the cylinder block 31, and the cylinder head 32 along the crankshaft 51. The camshaft 91 rotates in synchronism with the crankshaft 51 at a rotational speed that is one-half of the rotational speed of the crankshaft 51.

A spark ignition plug, not shown, is inserted into a spark ignition plug mount 32b (see FIG. 9) from the side of the cylinder head 32 that is opposite the cam chain compartment 96, i.e., from the other side along the crankshaft 51 toward the combustion chamber 36.

As shown in FIG. 3, the cylinder head 32 that has the cylinder axis X inclined largely forward so as to lie essentially horizontally, includes an intake port 42 and an exhaust port 43 extending respectively from an intake valve opening 40 and an exhaust valve opening 41 that are open in the inner surface 32ai of the combustion chamber ceiling wall 32a. The intake port 42 and the exhaust port 43 are curved respectively in upward and downward directions spaced away from each other.

The intake port 42 has an upstream end face 42a facing upward of the cylinder head 32 and connected to the inlet pipe 6, providing a continuous intake air-fuel mixture passage 80. The carburetor 7 is connected to an upstream side of the inlet pipe 6.

The exhaust port 43 has a downstream end facing downward of the cylinder head 32 and coupled to the exhaust pipe 38.

A tubular valve guide 44 is integrally fitted in a curved outer wall of the intake port 42 in the cylinder head 32. An intake valve 46 slidably supported in the valve guide 44 opens and closes the intake valve opening 40 of the intake port 42, which faces the combustion chamber 36.

An exhaust valve 47 is slidably supported in a valve guide 45 integrally fitted in a curved outer wall of the exhaust port 43 in the cylinder head 32, and opens and closes the exhaust valve opening 41 of the exhaust port 43, which faces the combustion chamber 36.

The intake valve 46 and the exhaust valve 47 are normally biased upward with respect to the engine by valve springs 48 such that their valve heads 46a and 47a close the intake valve opening 40 and the exhaust valve opening 41, respectively, that face the combustion chamber 36. When an intake rocker arm 94 and an exhaust rocker arm 95 that abut respectively against an intake cam 92 and an exhaust cam 93 on the camshaft 91 are swung, they depress respective stem ends 46b and 47b of the intake and exhaust valves 46 and 47, causing the intake and exhaust valves 46 and 47 to open at predetermined timings to bring the intake port 42 and the combustion chamber 36 and also the exhaust port 43 and the combustion chamber 36 into fluid communication with each other for thereby introducing an air-fuel mixture into the combustion chamber 36 and discharging an exhaust gas from the combustion chamber 36 at predetermined timings.

In the internal combustion engine 30 described above according to the present embodiment, the intake air-fuel mixture passage 80 is formed to produce a tumble flow of air-fuel mixture, i.e., a vertical swirl of air-fuel mixture, in the combustion chamber 36 for achieving preferred combustion in the combustion chamber 36.

Specifically, the intake air-fuel mixture passage 80 is divided into a first intake air-fuel mixture passageway 80A and a second intake air-fuel mixture passageway 80B by a partition 85 extending continuously from within the inlet pipe 6 into the intake port 42. The second intake air-fuel mixture passageway 80B is a lower passageway adjoining a lower end 71a of an on/off valve 71 of the carburetor 71 at the time it is closed, and serves as a tumble flow passageway. The first intake air-fuel mixture passageway 80A is an upper passageway except the second intake air-fuel mixture passageway 80B, and serves as a main flow passageway.

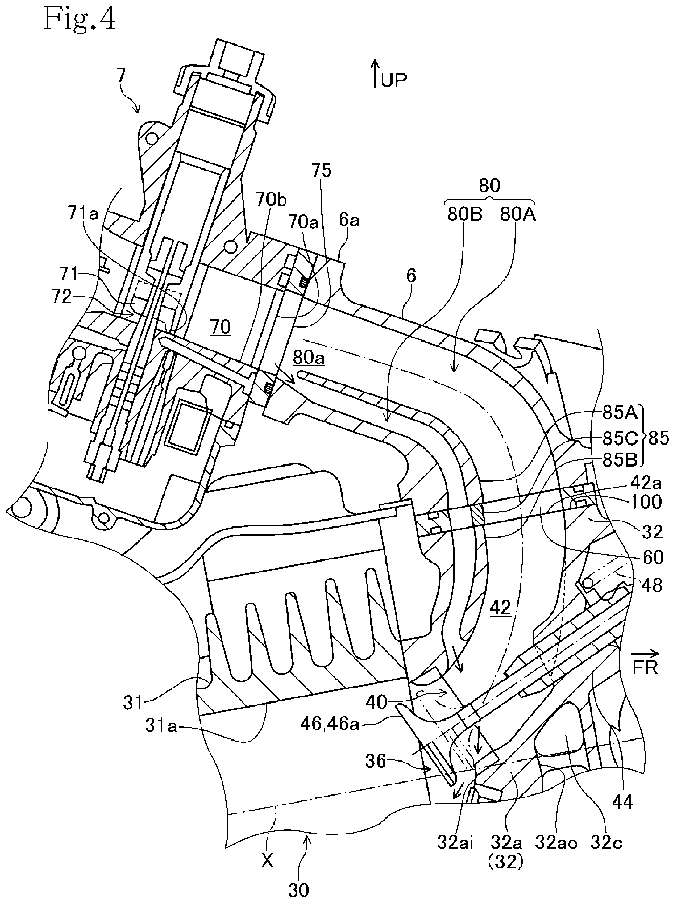

According to the present embodiment, as shown in FIG. 4, the carburetor 7 has a flow passageway 70 having an upstream side connected to the connecting tube 37 and a downstream end 70a connected to an upstream end 6a of the inlet pipe 6, i.e., an upstream end 80a of the intake air-fuel mixture passage 80, through an insulator 75. The on/off valve 71, which includes a venturi piston of a venturi unit 72, is provided in the flow passageway 70. The carburetor 7 includes a throttle valve 73 (FIG. 3) disposed upstream of the on/off valve 71, and is arranged as a negative-pressure-operated carburetor 7. The carburetor 7 itself is widely known in the art, and will not be described below.

As shown in FIG. 4, which is an enlarged view of a portion of the internal combustion engine shown in FIG. 3, the on/off valve 71 closes the flow passageway 70 when it is pressed against the lower end of the flow passageway 70. When the on/off valve 71 is open, a fuel is drawn from the venturi unit 72, producing an air-fuel mixture that is delivered from a downstream portion of the flow passageway 70 of the carburetor 7 into the inlet pipe 6, i.e., the intake air-fuel mixture passage 80.

The mixture of air and fuel (hereinafter simply referred to as "intake air") that flows into the intake air-fuel mixture passage when the internal combustion engine operates under a low load is of such a characteristic that it flows, from between the lower end 71a of the gate valve 71 having a small degree of opening and a bottom 70b of the flow passageway 70, as a sectorial flow along the bottom 70b, and then reaches the intake air-fuel mixture passage 80.

Therefore, when the internal combustion engine 30 operates under a low load, the intake air is liable to flow into the second intake air-fuel mixture passageway 80B. The second intake air-fuel mixture passageway 80B is arranged to allow the intake air to flow into the combustion chamber 36 over the back of the valve head 46a of the intake valve 46 that has been opened, making it easy to produce a tumble flow in the combustion chamber 36.

When the internal combustion engine 30 operates under a high load, the on/off valve 71 of the carburetor 7 is opened to a large degree, allowing most of the intake air to flow through the first intake air-fuel mixture passageway 80A. Since the intake air flows through the second intake air-fuel mixture passageway 80B at a low flow rate, the intake air flowing through the first intake air-fuel mixture passageway 80A and the intake air flowing through the second intake air-fuel mixture passageway 80B are prevented from colliding with each other in a downstream region of the intake air-fuel mixture passage 80, i.e., in a downstream region of the intake port 42.

As shown in FIG. 4, the intake port 42 and the inlet pipe 6 are connected to each other through the insulator 60. The partition 85 includes an inlet-pipe-side partition member 85A, an intake-port-side partition member 85B, and a partition member 85C corresponding to the thickness of the insulator 60.

The partition member 85 in the intake port 42 according to the present embodiment, i.e., the intake-port-side partition member 85B, is integrally formed with the cylinder head 32.

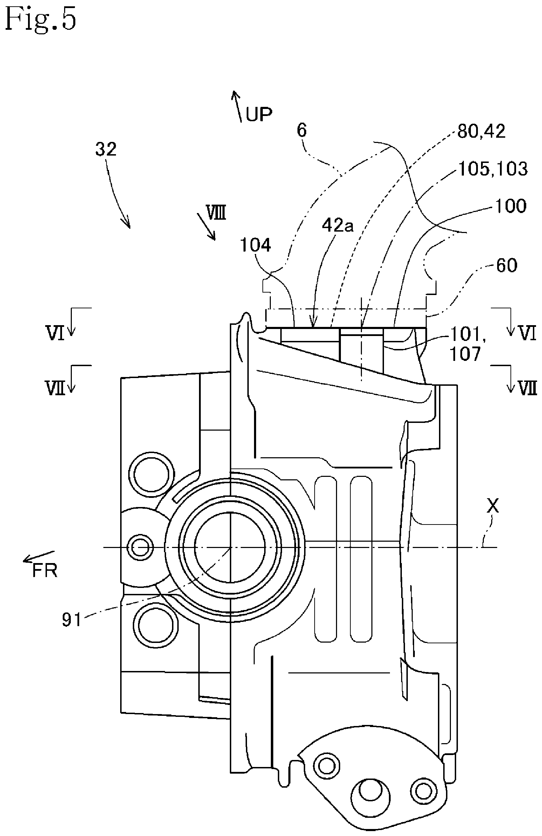

FIG. 5 shows a left-hand side elevational view of the shell body of the cylinder head, as viewed from the side opposite to FIGS. 3 and 4, which are right-hand sectional side elevational views, the left in FIG. 5 being oriented forward of the vehicle.

The cylinder head 32 has a flat connection face member 100 on which the inlet pipe 6 is to be mounted with the insulator 60 interposed therebetween.

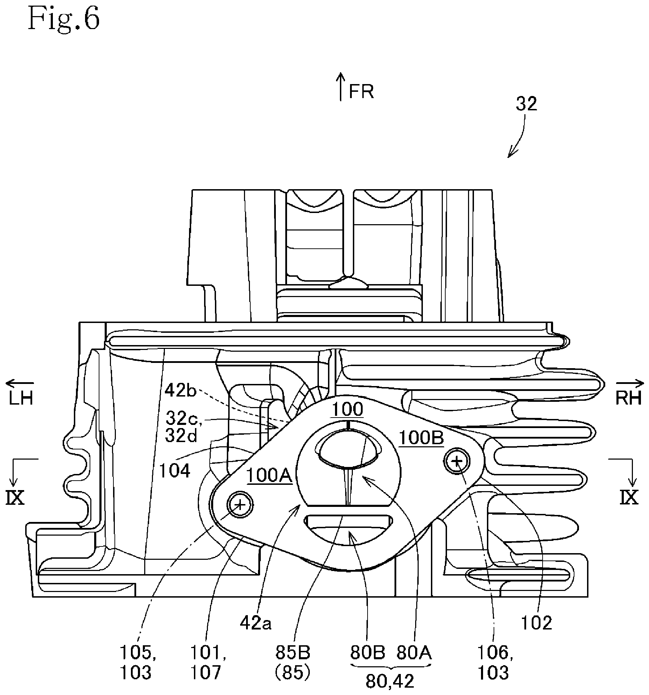

As shown in FIG. 6, which is a plan view of the shell body of the cylinder head 32, taken along line VI - VI of FIG. 5, the connection face member 100 is in the form of a flange of a tube joint. In order to allow the inlet pipe 6 to be fastened to the connection face member 100 with the insulator 60 interposed therebetween, according to the present embodiment, the connection face member 100 includes a first inlet pipe mount portion 101 on its left side and a second inlet pipe mount portion 102 on its right side.

The first inlet pipe mount portion 101 has a left internally threaded hole 105 defined therein for receiving a fastening bolt 103 to be threaded therein as a fastening member for the inlet pipe 6, and the second inlet pipe mount portion 102 has a right internally threaded hole 106 defined therein for receiving a fastening bolt 103 to be threaded therein as a fastening member for the inlet pipe 6.

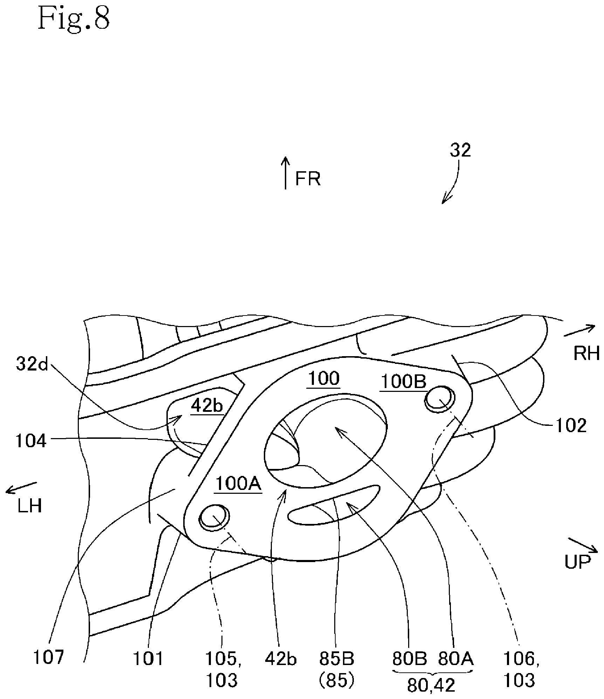

As shown in FIG. 8, which is a perspective view of an upper surface of the shell body of the cylinder head 32, taken along line VIII of FIG. 5, the connection face member 100 includes a right side area 100B where the second inlet pipe mount portion 102 is positioned, the right side area 100B being formed of the shell body of the cylinder head 32 itself, as a bulging portion thereof. Therefore, the second inlet pipe mount portion 102 is part of the shell body of the cylinder head 32 itself, and the right internally threaded hole 106 is formed in the shell body of the cylinder head 32 from the right side area 100B of the connection face member 100.

On the other hand, as shown in FIG. 8, the connection face member 100 includes a left side area 100A where the first inlet pipe mount portion 101 is positioned, the left side area 100A being integrally formed with the cylinder head 32, but formed as a flange-like member 104 extending from the shell body of the cylinder head 32 itself and spaced from an outer surface of the shell body of the cylinder head 32. Therefore, the left internally threaded hole 105 into which the fastening bolt 103 is to be threaded is defined in a boss 107 projecting from the outer surface of the shell body of the cylinder head 32 to the left side area 100A of the connection face member 100.

In other words, the first inlet pipe mount portion 101 includes the boss 107 projecting from the outer surface of the shell body of the cylinder head 32 to the left side area 100A of the connection face member 100 and integrally formed with the cylinder head 32 and the left side area 100A, integrally combining them.

As shown in FIG. 6, the upstream end face 42a of the intake port 42 is open substantially upward in the connection face member 100 at its center in the leftward and rightward directions. The first intake air-fuel mixture passageway 80A is defined in a front portion (upper portion in FIG. 6) of the upstream end face 42a, and the second intake air-fuel mixture passageway 80B is defined in a rear portion (lower portion in FIG. 6) of the upstream end face 42a, with the partition member 85 (85B) in the intake port 42 being disposed therebetween.

Generally, the first and second inlet pipe mount portions 101 and 102 that are positioned on the left and right of the connection face member 100 are provided in bilateral symmetry with respect to the center of the opening of the intake port 42. In the present embodiment, the first inlet pipe mount portion 101, particularly, the area of the left internally threaded hole 105, is shifted toward the second intake air-fuel mixture passageway 80B which is located rearward of the center of the opening of the intake port 42, and is essentially in the same position in the forward and rearward directions as the partition member 85 (85B) that extends in the leftward and rightward directions across the intake port 42.

Specifically, the first inlet pipe mount portion 101 of the connection face member 100 and the partition member 85 (85B) in the intake port 42 are integrally formed with each other, and the first inlet pipe mount portion 101, particularly, the area of the left internally threaded hole 105, is positioned on an extension of the partition member 85 (85B) that extends in the directions across the intake port 42, on the upstream end face 42a of the intake port 42.

The fact that at least part of the first inlet pipe mount portion 101 is positioned on an extension of the partition member 85 on the upstream end face 42a of the intake port 42 offers the following advantages: In the cylinder head 32 in which the partition member 85 (85B) is integrally formed with the intake port 42, the volume of the partition member 85 (85B) and the first inlet pipe mount portion 101 is increased, making it easy to retain the heat of a molten metal when the molten metal is introduced to cast the partition member 85 (85B) and the first inlet pipe mount portion 101, thereby increasing the fluidity of the molten metal that is introduced to cast the partition member 85 (85B) and the first inlet pipe mount portion 101. In addition, as the partition member 85 (85B) and the first inlet pipe mount portion 101 are structurally contiguous, the rigidity of and around the first inlet pipe mount portion 101 is increased.

Inasmuch as the second inlet pipe mount portion 102 is formed of the shell body of the cylinder head 32 itself, as a bulging portion thereof, the fluidity of the molten metal that is introduced to cast the second inlet pipe mount portion 102 and the rigidity thereof are excellent.

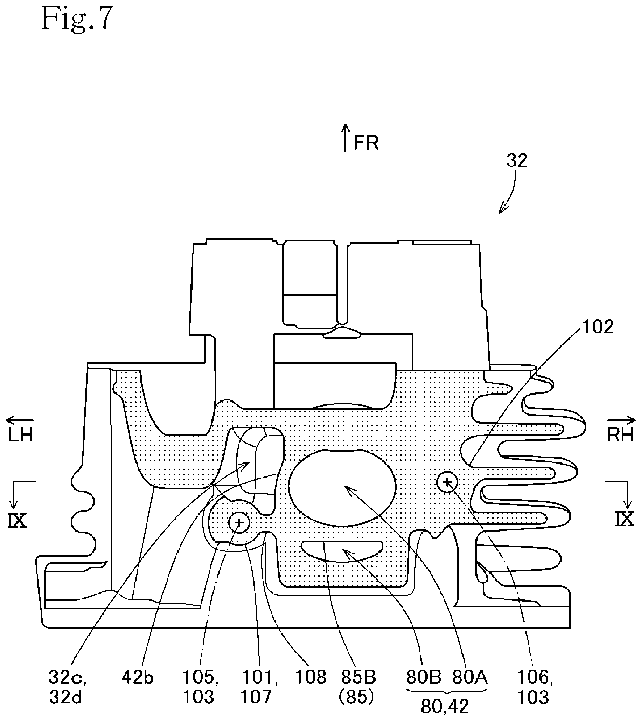

As shown in FIG. 7, which is a sectional plan view of the shell body of the cylinder head 32, taken along line VII - VII of FIG. 5, the right internally threaded hole 106 is defined in the shell body of the cylinder head 32 at the second inlet pipe mount portion 102. The left internally threaded hole 105 is defined in the boss 107 serving as part of the first inlet pipe mount portion 101, rearward (downward in FIG. 7) of the right internally threaded hole 106.

Heretofore, the boss 107 is surrounded by a space for providing a hollow area (a wall thickness reduction for a reduced weight), and is spaced from around the intake port 42, resulting in problems about the fluidity of a molten metal that flows to cast the cylinder head.

According to the present embodiment, the boss 107 that serves as part of the first inlet pipe mount portion 101 and the partition member 85 (85B) are integrally coupled to each other by a joint 108 extending a shortest distance therebetween. The joint 108 lies on the extension of the partition member 85B that extends in the leftward and rightward directions across the intake port 42. An intermediate portion, in particular, of the joint 108 has a thickness that substantially corresponds to the thickness of the partition member 85 (85B). With the joint 108 being positioned on the extension of the partition member 85B that extends in the leftward and rightward directions across the intake port 42, the overall volume of the portion that includes the boss 107 and the joint 108 is maintained, and the fluidity of a molten metal flowing through the joint 108 is maintained at the time the cylinder head is cast.

Therefore, the joint 108 by which the first inlet pipe mount portion 101 and the partition member 85 (85B) are coupled to each other over a shortest distance allows a molten metal introduced to cast the cylinder head to flow from a molding space for casting the cylinder head through the joint 108 that acts as a sprue into the partition member 85 (85B). Furthermore, the fluidity of a molten metal flowing into the partition 85 is increased because the heat of the molten metal is prevented from being absorbed by a mold for forming a hollow area which would otherwise be present between the first inlet pipe mount portion 101 and the partition member 85 (85B).

As shown in FIG. 9, which is a sectional front elevational view of the shell body of the cylinder head 32, taken along line IX - IX of FIGS. 6 and 7, as viewed rearwardly and downwardly from above the intake port 42 that is in an upper position, the cylinder head 32 has a cavity 32c provided in the vicinity of the spark ignition plug mount 32b on an outer surface 32ao of the combustion chamber ceiling wall 32a.

The cavity 32c, which is provided for air-cooling the cylinder head 32, has openings on the right side of the spark ignition plug mount 32b, the opening side (downward in FIG. 9) of the upper intake port 42, and the opening side (upward in FIG. 9) of the lower exhaust port 43, for promoting a circulation of ambient air therethrough.

The opening of the cavity 32c in the cylinder head 32 on the opening side of the intake port 42, i.e., an opening 32d on the side of the first inlet pipe mount portion 101, extends along a peripheral wall 42b of the intake port 42 to a front portion (upward portion in FIGS. 6 and 7) of the first inlet pipe mount portion 101, where it is open as shown in FIGS 6 to 8.

As can also be seen from FIG. 7, the boss 107 that serves as the first inlet pipe mount portion 101 is positioned rearward (downward in FIG. 7) of the center of the intake port 42 and generally positioned sideways of the partition member 85 (85B).

Since the opening 32d of the cavity 32c in the cylinder head 32 on the side of the first inlet pipe mount portion 101 is thus offset from the first inlet pipe mount portion 101, the open area of the opening 32d of the cavity 32c is increased for a better circulation of ambient air to cool the spark ignition plug mount 32b of the cylinder head 32 well.

While the embodiment of the present invention has been described above, the present invention is not limited to the above embodiment, but may be reduced to practice in various forms within the scope of present invention.

According to the present embodiment, the carburetor is disposed upstream of the inlet pipe. However, the present invention may be applied to an intake structure in which a throttle body is disposed upstream of the inlet pipe and a fuel injection valve is disposed downstream of the throttle body.

For illustrative purposes, the power unit having the internal combustion engine whose cylinder axis is inclined forward so as to lie essentially horizontally, with the parts disposed in the illustrated lateral layout, has been described above. However, the present invention covers different types of vehicles, power units, and internal combustion engines, internal combustion engines with vertical cylinder axes, and internal combustion engines whose parts are disposed in different lateral layouts, insofar as they fall within the scope of present invention.

### [Reference Signs List]

1···Two-wheel motorcycle (scooter-type motorcycle), 2···Vehicle body frame, 3···Power unit, 6···Inlet pipe, 30· ··Internal combustion engine (air-cooled internal combustion engine), 31···Cylinder block, 31a···Cylinder bore, 32···Cylinder head, 32a···Combustion chamber ceiling wall, 32ai···Inner surface, 32ao···Outer surface, 32b··· Spark ignition plug mount, 32c···Cavity, 32d···Opening (of the cavity 32c on the side of the first inlet pipe mount portion 101), 34···Piston, 34a···Top surface, 36··· Combustion chamber, 40···Intake valve opening, 41··· Exhaust valve opening, 42···Intake port, 42a···Upstream end face, 43···Exhaust port, 46···Intake valve, 47··· Exhaust valve, 50···Power unit case, 50a···Crankcase, 51··· Crankshaft, 80···Intake air-fuel mixture passage, 80a··· Upstream end, 80A···First intake air-fuel mixture passageway, 80B···Second intake air-fuel mixture passageway, 85···Partition, 85B···Intake-port-side partition member, 100···Connection face member, 101··· First inlet pipe mount portion (inlet pipe mount portion), 103···Fastening bolt (fastening member), 105···(Left) internally threaded hole, 107···Boss, 108···Joint, X··· Cylinder axis

## Claims

1. (Amended) An intake structure for an internal combustion engine, wherein a combustion chamber (36) is defined between a top surface (34a) of a piston (34) slidably fitted in a cylinder bore (31a) in a cylinder block (31) and an inner surface (32ai) of a combustion chamber ceiling wall (32a) in a cylinder head (32) which is faced by the top surface (34a), and an intake port (42) and an exhaust port (43) extend respectively from an intake valve opening (40) and an exhaust valve opening (41) that are open in the inner surface (32ai) of said combustion chamber ceiling wall (32a) in said cylinder head (32), said intake port (42) and said exhaust port (43) being curved in directions spaced away from each other; and
an inlet pipe (6) is connected to said intake port (42), providing a continuous intake air-fuel mixture passage (80) which is divided into a first intake air-fuel mixture passageway (80A) and a second intake air-fuel mixture passageway (80B) by a partition (85), said partition member (85B) in said intake port (42) being integrally formed with said cylinder head (32);
wherein said cylinder head (32) has an integral flange-like member (104) spaced from an outer surface of the cylinder head (32), as a connection face member (100) for connection to said inlet pipe (6), said connection face member (100) including an inlet pipe mount portion (101) for receiving an inlet pipe fastening member (103) to be threaded therein;
the inlet pipe mount portion (101) is connected integrally to the cylinder head (32) by way of a boss (107) having a threaded hole (105) defined therein for receiving a fastening bolt (103) to be threaded therein as a fastening member for the inlet pipe (6); and
the inlet pipe mount portion (101) and said partition member (85, 85B) in said intake port (42) are integrally formed with each other, and at least a part of said inlet pipe mount portion (101) is positioned on an extension of said partition member (85, 85B) in a direction across said intake port (42) on an upstream end face (42a) of said intake port (42), said inlet pipe mount portion (101) and the boss (107) being integrally coupled to said partition member (85, 85B) by way of a joint (108).

2. The intake structure for an internal combustion engine according to claim 1, wherein said joint (108) lies on an extension of said partition member (85, 85B) extending in directions across said intake port (42).

3. The intake structure for an internal combustion engine according to claim 1 or 2, wherein said cylinder head (32) has a spark ignition plug mount (32b) on an outer surface (32ao) of said combustion chamber ceiling wall (32a), and a cavity (32c) in a region of said spark ignition plug mount (32b), said cylinder head (32) having an opening (32d) on a side of said inlet pipe mount portion (101) of said cavity (32c), said opening (32d) and said inlet pipe mount portion (101) being offset from each other.

4. The intake structure for an internal combustion engine according to any one of claims 1, and 3, wherein said joint (108) has an intermediate portion of a thickness substantially corresponding to a thickness of the partition member (85, 85B).

5. The intake structure for an internal combustion engine according to any one of claims 1, 2 and 3, wherein said joint (108) couples said boss (107) and said partition member (85, 85B) to each other over a shortest distance.

## Patentansprüche

1. Einlassstruktur für einen Verbrennungsmotor, wobei eine Verbrennungskammer (36) zwischen einer oberen Fläche (34a) eines Kolbens (34), welcher in eine Zylinderbohrung (31a) in einem Zylinderblock (31) gleitbar eingesetzt ist, und einer inneren Fläche (32ai) einer Verbrennungskammer-Deckenwand (32a) in einem Zylinderkopf (32), zu welchem die obere Fläche (34a) weist, definiert ist, und ein Einlassanschluss (42) und ein Auslassanschluss (43) erstrecken sich jeweils von einer Einlass-Ventilöffnung (40) und einer Auslass-Ventilöffnung (41), welche in der inneren Fläche (32ai) der Verbrennungskammer-Deckenwand (32a) in den Zylinderkopf (32) offen sind, wobei der Einlassanschluss (42) und der Auslassanschluss (43) in Richtungen voneinander weg beabstandet gekrümmt sind; und wobei eine Einlassleitung (6) mit dem Einlassanschluss (42) verbunden ist, wobei ein zusammenhängender Einlass-Luft-Brennstoff-Gemisch-Durchgang (80) bereitgestellt ist, welcher in einen ersten Einlass-Luft-Brennstoff-Gemisch-Durchgang (80A) und einen zweiten Einlass-Luft-Brennstoff-Gemisch-Durchgang (80B) durch eine Trennung (85) unterteilt ist, wobei das Trennelement (85B) in dem Einlassanschluss (42) mit dem Zylinderkopf (32) integral gebildet ist;
wobei der Zylinderkopf (32) ein integrales flanschartiges Element (104) aufweist, welches von einer äußeren Fläche des Zylinderkopfs (32) beabstandet ist, als ein Verbindung-Seiten-Element (100) für eine Verbindung mit der Einlassleitung (6), wobei das Verbindung-Seiten-Element (100) einen Einlassleitung-Anbringungsabschnitt (101) zum Aufnehmen eines Einlassleitung-Befestigungselements (103) umfasst, welches darin einzuschrauben ist;
wobei der Einlassleitung-Anbringungsabschnitt (101) integral mit dem Zylinderkopf (32) mittels eines Vorsprungs (107) verbunden ist, welcher ein Gewindeloch (105) aufweist, welches darin zum Aufnehmen eines Befestigungsbolzens (103) definiert ist, welcher darin als ein Befestigungselement für die Einlassleitung (6) einzuschrauben ist; und wobei der Einlassleitung-Anbringungsabschnitt (101) und das Trennelement (85, 85B) in dem Einlassanschluss (42) miteinander integral gebildet sind und wenigstens ein Teil des Einlassleitung-Anbringungsabschnitts (101) an einer Erstreckung des Trennelements (85, 85B) in einer Richtung über den Einlassanschluss (42) an einer stromaufwärtigen Endseite (42a) des Einlassanschlusses (42) positioniert ist, wobei der Einlassleitung-Anbringungsabschnitt (101) und der Vorsprung (107) integral mit dem Trennelement (85, 85B) mittels einer Verbindung (108) integral gekoppelt sind.

2. Einlassstruktur für einen Verbrennungsmotor nach Anspruch 1, wobei die Verbindung (108) an einer Erstreckung des Trennelements (85, 85B) liegt, welche sich in Richtungen über den Einlassanschluss (42) erstreckt.

3. Einlassstruktur für einen Verbrennungsmotor nach Anspruch 1 oder 2, wobei der Zylinderkopf (32) eine Zündkerzenaufnahme (32b) an einer äußeren Fläche (32ao) der Verbrennungskammer-Deckenwand (32a) und einen Hohlraum (32c) in einem Bereich der Zündkerzenaufnahme (32b) aufweist, wobei der Zylinderkopf (32) eine Öffnung (32d) an einer Seite des Einlassleitung-Anbringungsabschnitts (101) des Hohlraums (32c) aufweist, wobei die Öffnung (32d) und der Einlassleitung-Anbringungsabschnitt (101) voneinander versetzt sind.

4. Einlassstruktur für einen Verbrennungsmotor nach einem der Ansprüche 1, 2 und 3, wobei die Verbindung (108) einen Zwischenabschnitt einer Dicke aufweist, welche im Wesentlichen einer Dicke des Trennelements (85, 85B) entspricht.

5. Einlassstruktur für einen Verbrennungsmotor nach einem der Ansprüche 1, 2 und 3, wobei die Verbindung (108) den Vorsprung (107) und das Trennelement (85, 85B) miteinander über eine kürzeste Distanz koppelt.

## Revendications

1. Structure d'admission pour un moteur à combustion interne, dans laquelle une chambre de combustion (36) est définie entre une surface haute (34a) d'un piston (34) ajusté coulissant dans un alésage de cylindre (31a) dans un bloc-cylindres (31) et une surface interne (32ai) d'une paroi de plafond de chambre de combustion (32a) dans une culasse (32) à laquelle fait face la surface haute (34a), et un orifice d'admission (42) et un orifice d'échappement (43) s'étendent respectivement depuis une ouverture de soupape d'admission (40) et une ouverture de soupape d'échappement (41) qui sont ouvertes dans la surface interne (32ai) de ladite paroi de plafond de chambre de combustion (32a) dans ladite culasse (32), ledit orifice d'admission (42) et ledit orifice d'échappement (43) étant incurvés dans des directions espacées l'une de l'autre ; et
une pipe d'arrivée (6) est raccordée audit orifice d'admission (42), fournissant un passage de mélange air-carburant d'admission continu (80) qui est divisé en une première voie de passage de mélange air-carburant d'admission (80A) et une deuxième voie de passage de mélange air-carburant d'admission (80B) par une séparation (85), ledit organe de séparation (85B) dans ledit orifice d'admission (42) étant formé d'un seul tenant avec ladite culasse (32) ;
dans laquelle ladite culasse (32) a un organe de type bride intégrale (104) espacé d'une surface externe de la culasse (32), en tant qu'organe de face de raccordement (100) à raccorder à ladite pipe d'arrivée (6), ledit organe de face de raccordement (100) comportant une portion de support de pipe d'arrivée (101) pour recevoir un organe de fixation de pipe d'arrivée (103) à visser à l'intérieur;
la portion de support de pipe d'arrivée (101) est raccordée d'un seul tenant à la culasse (32) au moyen d'un bossage (107) ayant un trou fileté (105) défini à l'intérieur pour recevoir un boulon de fixation (103) à visser à l'intérieur en tant qu'organe de fixation pour la pipe d'arrivée (6) ; et
la portion de support de pipe d'arrivée (101) et l'organe de séparation (85, 85B) dans ledit orifice d'admission (42) sont formés d'un seul tenant l'un avec l'autre, et au moins une partie de ladite portion de support de pipe d'arrivée (101) est positionnée sur une extension dudit organe de séparation (85, 85B) dans une direction en travers dudit orifice d'admission (42) sur une face d'extrémité amont (42a) dudit orifice d'admission (42), ladite portion de support de pipe d'arrivée (101) et le bossage (107) étant couplés d'un seul tenant audit organe de séparation (85, 85B) au moyen d'un joint (108).

2. Structure d'admission pour un moteur à combustion interne selon la revendication 1, dans laquelle ledit joint (108) se trouve sur une extension dudit organe de séparation (85, 85B) s'étendant dans des directions en travers dudit orifice d'admission (42).

3. Structure d'admission pour un moteur à combustion interne selon la revendication 1 ou 2, dans laquelle ladite culasse (32) a un support de bougie d'allumage par étincelle (32b) sur une surface externe (32ao) de ladite paroi de plafond de chambre de combustion (32a), et une cavité (32c) dans une région dudit support de bougie d'allumage par étincelle (32b), ladite culasse (32) ayant une ouverture (32d) sur un côté de ladite portion de support de pipe d'arrivée (101) de ladite cavité (32c), ladite ouverture (32d) et ladite portion de support de pipe d'arrivée (101) étant décalées l'une de l'autre.

4. Structure d'admission pour un moteur à combustion interne selon l'une quelconque des revendications 1, 2 et 3, dans laquelle ledit joint (108) a une portion intermédiaire d'une épaisseur correspondant sensiblement à une épaisseur de l'organe de séparation (85, 85B).

5. Structure d'admission pour un moteur à combustion interne selon l'une quelconque des revendications 1, 2 et 3, dans laquelle ledit joint (108) couple ledit bossage (107) et ledit organe de séparation (85, 85B) l'un à l'autre sur une distance la plus courte.
